# EUROPÄISCHE PATENTSCHRIFT

(11) **EP 1 979 122 B1**
(45) Veröffentlichungstag und Bekanntmachung des Hinweises auf die Patenterteilung: **28.04.2010**
(21) Anmeldenummer: 07703032.8
(22) Anmeldetag: 25.01.2007
(51) Int. Cl.: B23K 26/00

(54) **VERFAHREN ZUM MATERIALABTRAG AN FESTKÖRPERN UND DESSEN VERWENDUNG**
METHOD FOR REMOVING MATERIAL FROM SOLIDS AND USE THEREOF
PROCÉDÉ D'ENLÈVEMENT DE MATIÈRE SUR DES CORPS SOLIDES ET APPLICATION DUDIT PROCÉDÉ

(30) Priorität: 25.01.2006 DE 102006003605; 25.01.2006 DE 102006003608
(43) Veröffentlichungstag der Anmeldung: 15.10.2008
(73) Patentinhaber: Fraunhofer-Gesellschaft zur Förderung der angewandten Forschung e.V., 80686 München (DE); Johann Wolfgang Goethe-Universität Frankfurt am Main, 60325 Frankfurt am Main (DE)
(72) Erfinder: MAYER, Kuno, 79114 Freiburg (DE); KRAY, Daniel, 79112 Freiburg (DE); KOLBESEN, Bernd, O., 61350 Bad Homburg (DE); HOPMAN, Sybille, 77972 Mahlberg (DE)
(74) Vertreter: Pfenning, Meinig & Partner GbR
(86) Internationale Anmeldenummer: PCT/EP2007/000642
(87) Internationale Veröffentlichungsnummer: WO 2007/085454

(56) Entgegenhaltungen:
- EP-A2- 0 450 313
- WO-A-2004/015753

## Beschreibung

Die Erfindung betrifft ein Verfahren zum Materialabtrag an Festkörpern, insbesondere zum Mikrostrukturieren und Schneiden, mittels Flüssigkeitsstrahlgeführtem Laserätzen, wobei das abgetragene Material ebenso wie nicht-abreagierte Ätzkomponenten in hohem Umfang rezykliert werden. Auf diese Weise kann das Silicium in hoher Reinheit entweder polykristallin zurückgewonnen werden oder in derselben Prozesskette epitaktisch auf anderen Substraten abgeschieden werden.

Es sind bereits verschiedene Verfahren bekannt, bei denen mit Hilfe eines Lasers Silicium oder andere Werkstoffe geätzt oder ablativ abgetragen werden, mit dem Ziel einer Mikrostrukturierung der Oberfläche der Werkstoffe (US 5,912,186 A). Ebenso ist aus der EP 0 762 974 B1 das Konzept eines Flüssigkeitsstrahl-geführten Lasers bekannt, wobei hier Wasser als flüssiges Medium eingesetzt wird. Der Wasserstrahl dient hier als Leitmedium für den Laserstrahl und als Kühlmittel für die Kanten der bearbeiteten Stellen auf dem Substrat, wobei das Ziel einer Verringerung der Schäden durch thermische Spannung im Material verfolgt wird. Mit Flüssigkeitsstrahl-geführten Lasern werden tiefere und etwas saubere Schnittgruben erreicht als mit "trockenen" Lasern. Auch das Problem des ständigen Nachfokussierens des Laserstrahls bei zunehmender Grabentiefe ist mit im Flüssigkeitsstrahl eingekoppelten Lasern gelöst. Nach wie vor treten jedoch bei den beschriebenen Systemen Seitenschädigungen in einem Ausmaß auf, die einen weiteren Materialabtrag an den Bearbeitungsflächen erfordern, der sowohl den Gesamtprozess der Materialbearbeitung aufwendig gestaltet als auch zu zusätzlichem Materialverlust und damit erhöhten Kosten führt.

Bisher sind die klassischen, auf der Basis von photolithographisch definierten Ätzmasken arbeitenden Mikrostrukturierungsprozesse bezüglich Präzisierung und Seitenschädigung Laser-gestützten Verfahren überlegen, jedoch viel aufwendiger und erheblich langsamer als diese.

Ebenso sind aus dem Stand der Technik Verfahren bekannt, bei denen Laserlicht zur Anregung von Ätzmedien sowohl in gasförmiger wie in flüssiger Form über dem Substrat angewendet wird. Als Ätzmedien dienen hier verschiedene Stoffe, z.B. Kaliumhydroxyd-Lösungen unterschiedlicher Konzentration (von Gutfeld, R. J./Hodgson, R. T.: "Laser enhanced etching in KOH" in: Appl. Phys. Lett., Vol. 40(4), 352-354, 15. February (1982)) bis hin zu flüssigen oder gasförmigen halogenierten Kohlenwasserstoffen, insbesondere Brommethan, Chlormethan oder Trifluorjodmethan (Ehrlich, D. J./Osgood, R. M./Deutsch, T. F.: "Laserinduced microscopic etching of GaAs and InP" in: Appl. Phys. Lett., Vol. 36(8), 698-700, 15. April (1980)).

Bislang beschränken sich die diesbezüglichen Versuche jedoch ausschließlich auf die Oberflächenbearbeitung der Substrate. Tiefschnitte oder gar das Schneiden von Wafern aus einem Ingot mit Hilfe von Lasern und Ätzmedien wurde bisher noch nicht in Erwägung gezogen. Die anfallenden Ätzprodukte wurden bislang nicht wieder aufbereitet.

Das Dokument WO2004/015753 offenbart ein Verfahren zum Materialabtrag durch ein Flüssigkeitsstrahl-geführtes Laser-Ätzen.

Großindustriell werden Siliciumwafer gegenwärtig praktisch ausschließlich mit einem Verfahren hergestellt, dem Vieldraht-Trennläppen (engl.: multi-wire slurry sawing). Dabei werden die Siliciumblöcke mittels bewegter Drähte, die mit einer Schleifemulsion (z.B. PEG + SiC-Partikel) benetzt werden, mechanisch abrasiv durchtrennt. Da der Schneiddraht, der einige Hundert Kilometer lang sein kann, vielfach um berillte Drahtführungsrollen gewickelt wird, können mit dem entstehenden Drahtfeld viele hundert Wafer gleichzeitig geschnitten werden.

Neben dem großen Materialverlust von ca. 50 %, bedingt durch die relativ breite Schnittkerbe, besitzt dieses Verfahren noch einen weiteren schwerwiegenden Nachteil. Durch das mechanische Einwirken des Schneiddrahtes und der Abrasivstoffe beim Sägen treten auch hier an den Oberflächen der geschnittenen Halbleiterscheiben erhebliche Schädigungen im kristallinen Gefüge auf, die danach einen weiteren chemischen Materialabtrag erfordern.

Die Abscheidung polykristallinen Siliciums aus einem Gasgemisch bestehend aus halogenierten Siliciumverbindungen, etwa Trichlorsilan, und Wasserstoff ist ein bereits seit langem bekanntes und erprobtes Verfahren aus der Prozesskette der großtechnischen Herstellung von Reinst-Silicium für die Halbleiterchiptechnologie.

Ausgehend hiervon war es Aufgabe der vorliegenden Erfindung ein Verfahren bereitzustellen, das einen Materialabtrag an Festkörpern ermöglicht, wobei eine Kristallschädigung des Festkörpermaterials vermieden werden soll und eine möglichst hohe Wiederverwertung des abgetragenen Materials realisiert wird.

Diese Aufgabe wird durch das Verfahren mit den Merkmalen des Anspruchs 1 sowie dessen Verwendung mit den Merkmalen des Anspruchs 31 gelöst. Die weiteren abhängigen Ansprüche zeigen vorteilhafte Weiterbildungen auf.

Erfindungsgemäß wird ein Verfahren zum Materialabtrag an Festkörpern bereitgestellt, das auf folgenden Schritten basiert:
a) Zunächst wird der Festkörper mit einem Flüssigkeitsstrahl-geführten Laser behandelt. Der hierbei eingesetzte Flüssigkeitsstrahl besteht dabei aus einem Ätzmedium für den Festkörper, das mindestens ein Halogenierungsmittel enthält.
b) Im Anschluss erfolgt eine Isolierung von halogenhaltigen Verbindungen des Festkörpermaterials durch Destillation, Kondensation und/oder Kryofokussierung aus den Ätzprodukten.
c) In einem weiteren Schritt wird das Festkörpermaterial rezykliert, indem die gasförmigen, halogenhaltigen Verbindungen zersetzt werden.

Das vorliegende Verfahren kombiniert verschiedene Techniken (flüssigkeitsstrahlgeführtes Laser-Ätzen, polykristalline Silicium-Abscheidung, Rezyklierung) zu einem neuen geschlossenen Gesamtprozess. Es verbindet einen schnellen Materialabtrag mit einem Laser mit der schonenden Entfernung von Material durch einen chemischen Angriff, wobei sich das abgetragene Material im Ätzmedium auflöst oder in gasförmige Verbindungen überführt wird. Dabei wird anders als im Falle des Oberflächenschmelzens oder eines mechanischen Einwirkens das kristalline Gefüge des Substrats nicht geschädigt.

Durch ein an die Reaktionskammer, in der das Laser-Ätzen erfolgt, angeschlossenes Recycling-System werden nicht nur die nicht abreagierten Ätzprodukte sondern auch das abgetragene Silicium teilweise wieder zurückgewonnen. Damit wird die Verlustmenge an nicht verwertetem Silicium drastisch reduziert.

In einer bevorzugten Variante des Verfahrens ist das Ätzmedium ausgewählt aus der Gruppe bestehend aus wasserfreien, halogenhaltigen organischen oder anorganischen Verbindungen und deren Gemischen. Hierzu zählen beispielsweise fluorierte, chlorierte, bromierte oder jodierte Kohlenwasserstoffe, wobei die Kohlenwasserstoffe geradkettige oder verzweigte C₁-C₁₂-Kohlenwasserstoffe sind. Besonders bevorzugte Vertreter sind Tetrachlorkohlenstoff, Chloroform, Bromoform, Dichlormethan, Dichloressigsäure, Acetylchlorid und/oder Gemische hiervon.

Zur chemischen Anregung dienen je nach gewähltem Ätzmedium sämtliche Wellenlängen vom infraroten Bereich bis in den UV-Bereich, wobei IR-Laser vorwiegend, aber nicht ausschließlich thermochemisch, UV-Laser hingegen vorwiegend aber nicht ausschließlich photochemisch anregen. Die chemische Anregung basiert vorwiegend auf der homolytischen Spaltung der Halogen-verbindungen, wobei sehr reaktive Halogen- bzw. Kohlenwasserstoff-Radikale gebildet werden, die das Silicium mit hoher Geschwindigkeit ätzen und in ihrer Ätzwirkung ionischen Ätzmedien überlegen sind. Ebenso ist es möglich, Grün-Laser mit einer Emission im grünen Bereich des Spektrums, d.h. bei etwa 532 mm, einzusetzen.

Beispiele für chemische Anregungen:

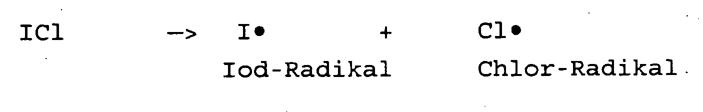

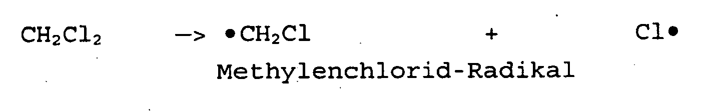

4 Cl• + Si -> SiCl₄

Die Ätzwirkung erfolgt praktisch unselektiv bezüglich bestimmter Kristallorientierungen. Eine Rekombination von Radikalen führt häufig zu ebenfalls sehr reaktiven Stoffen, die Silicium direkt mit einer hohen Ätzrate abtragen können. Diese Reaktion erfolgt entsprechend den nachfolgenden Gleichungen:

2Cl• -> Cl₂

2Cl₂ + Si SiCl₄

Dieser Sachverhalt sowie die Existenz einer Radikal-Ketten-Reaktion gewährleisten einen kontinuierlichen und relativ konstanten hohen Abtrag des Siliciums.

Als Ätzprodukte werden z.B. mehrfach halogenierte Silane unterschiedlicher Zusammensetzung, halogenierte kurzkettige Kohlenwasserstoffe unterschiedlicher Zusammensetzung sowie SiC und C in sehr geringer Menge, die allesamt neben noch nicht abreagierten Ausgangsstoffen vorliegen, gebildet. Beispiele für halogenierte Silane sind SiCl₄, SiHCl₃, SiH₂Cl₂, SiBr₄, SiHBr₃, Sil₄ und SiBr₂Cl₂. Beispiele für halogenierte Kohlenwasserstoffe sind CH₂CI-CHCl₂, CHCl₂-CHCl₂, CHBrCl-CHCl₂, CH₂I-CH₂CI, CCl₂=CHCl, C₆Cl₆ und C₂Cl₆.

Weiterhin ist es bevorzugt, dass die Ätzprodukte einer katalytischen Hydrohalogenierung unter Bildung von gasförmigen und halogenhaltigen gesättigten Verbindungen unterzogen werden.

Die katalytische Hydrohalogenierung erfolgt vorzugsweise mit Chlorwasserstoff und Platin als Katalysator.

Die sich bei der Hydrohalogenierung bildenden gasförmigen, halogenhaltigen und gesättigten Verbindungen werden in einer bevorzugten Variante vor der Rezyklierung, d.h. der Zersetzung dieser Verbindung, kryofokussiert und/oder kondensiert.

Um eine geschlossene Prozesskette zu ermöglichen, werden vorzugsweise die in Schritt c) erzeugten Halogenwasserstoffe der Hydrohalogenierung in Schritt b) erneut zugeführt.

In manchen Fällen ist es bevorzugt - je nach Wahl der Ätzmischung - die Atmosphäre in der Bearbeitungskammer mit definierten Mengen an trockenem Sauerstoff oder trockener Luft (als Sauerstofflieferant) anzureichern. Sauerstoff erhöht nicht nur in bestimmten Fällen die Ätzrate einiger Ätzmischungen, indem er mit diesen reaktive Zwischenprodukte bildet, sondern verhindert auch die unerwünschte Abscheidung von Kohlenstoff-Halogen-Polymeren oder Kohlenstoffpartikeln auf dem Substrat, indem er diese Abfallprodukte gleich bei deren Entstehung aufoxidiert. Freier Sauerstoff muss jedoch vor der weiteren Verarbeitung der Ätzprodukte wieder aus dem System entfernt werden, da er die folgenden Prozessschritte behindert oder unmöglich macht. Beispielsweise würde er in Subsystem VIII zusammen mit dem dort eingeleiteten Wasserstoff ein (hochexplosives) Knallgas-Gemisch bilden. Reiner Sauerstoff kann beim Auskondensieren bzw. Ausfrieren der Ätzprodukte in Subsystem V von diesen abgesaugt und zum Teil ebenfalls wieder recycled werden (in der beigefügten Aufbauskizze nicht eingezeichnet), da sein Siedepunkt um ein Vielfaches niedriger liegt als die Siedepunkte nahezu sämtlicher anderer im System vorhandenen Stoffe, mit der Ausnahme von Kohlenstoffmonoxid, das ebenfalls mit abgesaugt wird.

Wird mit Sauerstoffbeimengungen gearbeitet, so entsteht als Abfallprodukt unter anderem Phosgen. Dieses steht im Gleichgewicht mit Kohlenmonoxid und Chlor, aus denen es bei Temperaturen bis 300 °C gebildet wird. Oberhalb dieser Temperatur findet eine vollständige Zersetzung in die Ausgangsstoffe statt. Die Zersetzung wird durch Anwesenheit von Sauerstoff (Oxidation des Phosgens zu CO₂ und Chlor) gefördert. Dieser Sachverhalt kann zu seinem Abbau genutzt werden.

Eine weitere erfindungsgemäße Variante sieht vor, dass in Schritt a) und/oder zwischen den Schritten a) und b) eine teilweise Hydrohalogenierung durch Zusatz eines Halogenwasserstoffs durchgeführt wird. Die Einleitung des Halogenwasserstoffs kann dabei in der Bearbeitungskammer, den Zwischenspeichern und/oder den Tanks erfolgen. Gegenüber der zuvor beschriebenen Variante, bei der Sauerstoff eingesetzt wird, ist es vorteilhaft, dass die Bildung von Phosgen im Wesentlichen unterdrückt wird. Die Bildung von störenden Polymeren aus den ungesättigten Halogen-Kohlenstoff-(Wasserstoff)-Verbindungen wird dadurch verhindert, dass die ungesättigten Verbindungen sofort bei ihrer Bildung mit dem Halogenwasserstoff abgesättigt werden und damit nicht mehr in beeinträchtigendem Maße polymerisieren können.

Eine weitere Variante des erfindungsgemäßen Verfahrens basiert darauf, dass als Ätzmedium ein kohlenstofffreies Halogenierungsmittel eingesetzt wird, was eine praktikable und kostengünstige Alternative zu kohlenstoffhaltigen Halogenquellen, die häufig ozonschädigend sind, darstellt. Nach dem erfindungsgemäßen Verfahren sind somit keine besonderen gesetzlichen Handhabungsbestimmungen mehr einzuhalten, was die Prozesskette deutlich vereinfacht. Ein weiterer wesentlicher Vorteil des erfindungsgemäßen Verfahrens beruht auf der abfallarmen Bearbeitungsmöglichkeit von Festkörpern, bei denen der Großteil des abgetragenen Festkörpermaterials rezykliert werden kann. Darüberhinaus wird die Bildung von halogenhaltigen Kohlenwasserstoffen und sich daraus herleitenden Polymeren verhindert. Ein weiterer wesentlicher Vorteil des erfindungsgemäßen Verfahrens beruht darauf, dass polykristallines Silicium zurückgewonnen werden kann, ohne dass es durch Siliciumkarbid kontaminiert ist.

Überraschenderweise konnte darüberhinaus gezeigt werden, dass die erfindungsgemäß eingesetzten Halogenierungsmittel eine deutlich höhere Ausbeute an effektiv nutzbaren Halogenen liefern und somit das Gesamtverfahren deutlich wirtschaftlicher machen. Dies betrifft ebenso die mit dem erfindungsgemäßen Verfahren verbundene effektivere Nutzung der eingestrahlten Laserenergie. Dies wird erreicht durch den Einsatz von Absorber-Stoffen in Verbindung mit den erfindungsgemäß verwendeten Halogenierungsmitteln, wodurch die für den Prozess nutzbare Palette an Laserstrahlung erweitert wird.

Vorzugsweise ist das Halogenierungsmittel ausgewählt aus der Gruppe der halogenhaltigen Schwefel- und/oder Phosphorverbindungen. Hierzu zählen insbesondere Sulfurylchlorid, Thionylchlorid, Schwefeldichlorid, Dischwefeldichlorid, Phosphortrichlorid, Phosphorpentachlorid und deren Gemische.

Eine weitere bevorzugte Variante sieht vor, dass als Ätzmedium ein Gemisch aus Salpetersäure als erster Komponente sowie Flusssäure, Ammoniumfluorid oder Ammoniumbifluorid als zweiter Komponente in einem wässrigen oder organischen Lösungsmittel eingesetzt wird. Als Lösungsmittel sind hier beispielsweise Wasser oder Eisessig bevorzugt. Eisessig besitzt gegenüber Wasser den Vorteil, dass das sich bildende flüchtige, jedoch hydrolyseempfindliche SiF₄ bzw. SiF₆ besser isoliert werden kann. Der Anteil an Flusssäure im Gemisch beträgt vorzugsweise von 1 bis 20 Gew.-%. Gegenüber chlorhaltigen Halogenierungsmitteln besitzen die fluorhaltigen Halogenierungsmittel den Vorteil einer höheren Ätzgeschwindigkeit, wobei allerdings gegenüber diesen der Nachteil auftritt, dass sich das abgetragene Silicium schlechter zurückgewinnen lässt aufgrund der besonderen Stabilität der Si-F-Bindung. Allerdings können Siliciumfluoride, wie SiF₄ und SiF₆, insbesondere wenn sie wasser- und sauerstofffrei isoliert werden, als wertvolle Synthesechemikalien in der Organosilicium-Chemie eingesetzt werden. Die Handhabung von Gemischen von Flusssäure und Salpetersäure stellt besondere technische Ansprüche an die Apparaturen. Diese müssen eine besonders hohe Korrosionsbeständigkeit, insbesondere gegenüber Flusssäure, aufweisen. Sämtliche druckbeständigen Komponenten, z.B. der optische Kopf der Bearbeitungsvorrichtung oder die Leitung zwischen Pumpe und Lasereinkopplungseinheit sind vorzugsweise aus Hastelloy-Stählen gestaltet und mit einem flusssäurefesten Überzug versehen. Dieser flusssäurefeste Überzug besteht vorzugsweise aus einem Copolymer aus Ethylen und Chlortrifluorethylen, auch bekannt unter E-CTFE. In den Fällen, in denen keine hohe thermische Belastbarkeit oder sehr hohe Druckbeständigkeit erforderlich ist, wie z.B. in der Bearbeitungskammer, wird vorzugsweise Polytetrafluorethylen als flusssäurefester Überzug eingesetzt.

In einer weiteren bevorzugten Variante des erfindungsgemäßen Verfahrens wird vorgesehen, dass das Ätzmedium zusätzlich elementare Halogene in flüssiger Form, z.B. Brom und Iod, und/oder Interhalogenverbindungen, z.B. Iodmonochlorid oder Iodtrichlorid, enthält.

Eine weitere bevorzugte Variante des erfindungsgemäßen Verfahrens sieht vor, dass das Ätzmedium zusätzlich eine starke Lewis-Säure, wie z.B. Bortrichlorid und Aluminiumtrichlorid, enthält. Durch diese Zusätze kann die Zersetzungsneigung der Ätzmedien unter bestimmten Bedingungen, z.B. für Sulfurylchlorid und Thionylchlorid, erhöht werden und damit die Reaktivität des Ätzmediums gesteigert werden.

Vorzugsweise werden die Halogenierungsmittel thermisch oder photochemisch aktiviert. Diese Anregung kann dabei durch den erfindungsgemäß eingesetzten Laser ausgelöst werden. Eine bevorzugte Variante sieht hierbei vor, dass ein Laser mit einem im UV-Bereich liegenden Emission eingesetzt wird und so eine im Wesentlichen photochemische Aktivierung des Ätzmediums erfolgt. Eine zweite bevorzugte Variante sieht vor, dass der Laser mit einer im IR-Bereich liegenden Emission eingesetzt wird und so eine im Wesentlichen thermochemische Aktivierung des Ätzmediums erfolgt. Ebenso ist es möglich, einen Laser mit einer im grünen Bereich des Spektrums, insbesondere bei 532 nm liegenden Emission einzusetzen, wobei eine im Wesentlichen photochemische Aktivierung erfolgt. Es kann ebenso ein Laser mit einem im blauen Bereich des Spektrums, insbesondere bei 457 nm, liegenden Immission eingesetzt werden, wobei auch hier eine im Wesentlichen photochemische Aktivierung erfolgt.

Damit die eingestrahlte Laser-Energie effektiv genutzt werden kann, ist es bevorzugt, dem Ätzmedium zusätzlich Strahlabsorber zuzusetzen, welche die eingestrahlte elektromagnetische Strahlung zum Teil absorbieren und dadurch angeregt werden. Beim Rückfall in den Grundzustand wird die freiwerdende Energie an bestimmte Komponenten des Ätzmediums oder des zu bearbeitenden Festkörpers abgegeben, die dadurch ihrerseits angeregt und somit reaktiver werden. Das Spektrum der Anregungsform reicht hierbei von einer rein thermischen bis hin zu einer rein chemischen (Elektronentransfer-)Anregung. Als Strahlungsabsorber werden vorzugsweise Farbstoffe, insbesondere Eosin, Fluorescein, Phenolphtalein, Bengalrosa als Adsorber im sichtbaren Bereich des Lichts eingesetzt. Als UV-Absorber werden vorzugsweise polyzyklische aromatische Verbindungen, z.B. Pyren und Naphtacen, verwendet. Neben einer Steigerung der effektiven Nutzung der eingestrahlten Energie ist durch die Strahlungsabsorber auch ein breiteres Spektrum an nutzbarer Strahlung für das erfindungsgemäße Verfahren gegeben.

Die Aktivierung der Halogenierungsmittel kann auch auf radikalischem Wege durch Zusatz von Radikalstartern, z.B. Dibenzoyl-Peroxid oder Azoisobutyronitril (AIBN), erfolgen, die dem Ätzmedium zugesetzt werden.

Die sich beim erfindungsgemäßen Verfahren bildenden Ätzprodukte können in flüssiger als auch in gasförmiger Form anfallen. Die gasförmigen Ätzprodukte werden dabei vorzugsweise kryofokussiert und/oder kondensiert, während die flüssigen Ätzprodukte bevorzugt destillativ aufgetrennt werden.

Vorzugsweise handelt es sich bei dem Festkörper um eine Siliciumscheibe, z.B. in Form eines Wafers. Im Falle, dass der Festkörper aus Silicium besteht, liegt als gasförmige und halogenhaltige Verbindung eine halogenierte Silanverbindung vor. Diese kann dann im Anschluss zu polykristallinem Silicium und Halogenwasserstoff zersetzt werden. Die Zersetzung erfolgt dabei vorzugsweise nach aus dem Stand der Technik bekannten Verfahren, z.B. dem Siemens-Verfahren. Hierbei wird die halogenierte Silanverbindung an einem beheizten Reinstsiliciumstab in Anwesenheit von Wasserstoff thermisch zersetzt, wobei das elementare Silicium an den Stäben aufgewachsen wird.

Ebenso ist es aber auch möglich, dass das Silicium in der Prozesskette epitaktisch abgeschieden wird.

Bei der Verwendung von Halogen-Schwefel-(Sauerstoff-) Verbindungen als Halogenquelle und/oder Lösemittel, wie beispielsweise Sulfuryl- oder Thionylchlorid, reduziert sich der apparative Aufbau des gesamten Systems erheblich. Dies ist auf folgende drei chemische Eigenarten des Schwefels und seiner Verbindungen zurückzuführen:
1. Der Schwefel und seine im System vorhandenen Verbindungen bilden unter den gegebenen Bedingungen keine ungesättigten Verbindungen wie etwa Kohlenstoff-Halogen-(Wasserstoff-)Verbindungen, die zur Polymerisation neigen.
2. Der Schwefel und seine im System vorhandenen Verbindungen stellen unter den gegebenen Bedingungen keine ernstzunehmende Kontaminationsquelle für das zu bearbeitende oder wiederabgeschiedene Silicium dar.
3. Die beim Prozess entstehenden Abfallprodukte bedürfen aufgrund ihres veränderten Gefahrenpotentials im Vergleich zu Kohlenstoff-Halogen-(Wasserstoff-)Verbindungen (welche zum Teil stark ozonschädigend sind, wie beispielsweise Tetrachlorkohlenstoff) keiner besonderen Handhabung (etwa einem geschlossenen Kreislauf).

Je nach Wahl der Reaktionsbedingungen kann mit dem erfindungsgemäßen Verfahren auch eine Dotierung der Festkörperoberfläche mit Elementen der III., V. und VI. Hauptgruppe parallel oder zeitlich versetzt zum Materialabtrag durchgeführt werden. Besonders bevorzugte Dotierungselemente sind hier Bor, Phosphor und Schwefel. Es können aber ebenso alle aus dem Stand der Technik bekannten Dotierungsmittel für das jeweilige Festkörpermaterial eingesetzt werden.

Das vorliegende Verfahren ermöglicht eine schnelle, einfache und kostengünstige Bearbeitung von Festkörpern, insbesondere aus Silicium, z.B. eine Mikrostrukturierung oder auch das Schneiden von Siliciumblöcken in einzelne Wafer. Dabei bringt der Strukturierungsschritt keine Kristallschädigungen in das Festkörpermaterial ein, sodass die Festkörper oder geschnittenen Wafer keine für den Stand der Technik übliche nasschemische Schadenätze benötigen. Zudem wird der bisher anfallende Schneidabfall über eine angeschlossene Recycling-Einrichtung wiederverwertet, sodass der Gesamtschnittverlust insbesondere beim Wafer-Schneiden drastisch reduziert werden kann (z.B. um 90 %). Dies wirkt sich unmittelbar minimierend auf die Produktionskosten der auf diese Weise bearbeiteten Siliciumkomponenten aus, wie z.B. auf die nach wie vor relativ hohen Herstellungskosten für Solarzellen.

Das erfindungsgemäße Verfahren kann, wie bereits erwähnt, auf beliebige Festkörper angewendet werden, insofern das verwendete Chemikaliensystem ähnliche Ätzwirkung entfaltet.

Anhand der nachfolgenden Figuren soll der erfindungsgemäße Gegenstand näher erläutert werden, ohne diesen auf die hier gezeigte spezielle Ausführungsform einschränken zu wollen.

Fig. 1 zeigt anhand einer schematischen Darstellung den erfindungsgemäßen Verfahrensablauf bei Verwendung halogenhaltiger Kohlenwasserstoffe.

Fig. 2 zeigt anhand einer schematischen Darstellung den erfindungsgemäßen Verfahrensablauf bei Verwendung halogenhaltiger Schwefelverbindungen als Ätzmedium.

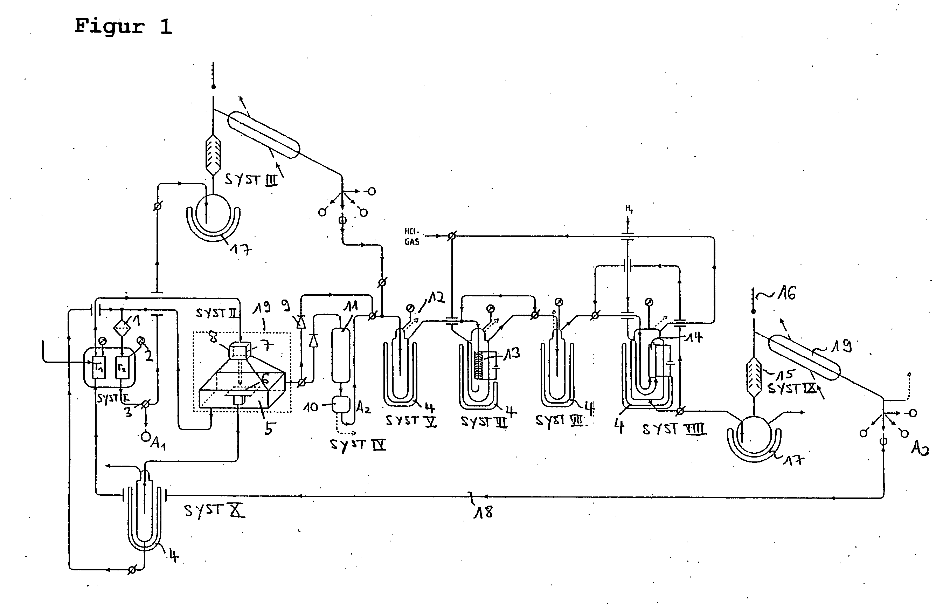

Die in Fig. 1 dargestellte Apparatur besteht aus 10 Subsystemen. Den einzelnen Subsystemen sind dabei folgende Aufgaben zugewiesen:
- System I:: Aufbewahrung der Ätzmedien
- System II:: Halbleiterbearbeitung (Schneiden, Mikrostrukturierung)
- System III:: Fraktionierung flüssiger Ätzprodukte aus der Reaktionskammer
- System IV:: Auftrennung und Analyse flüchtiger Ätzprodukte direkt aus der Reaktionskammer
- System V:: 1. Zwischenspeicherung der Ätzprodukte (ungesättigte Produkte hier noch möglich); durch Kühlung bzw. Erwärmung wird die Gaseinspeisung in System VI. sorgfältig dosiert
- System VI:: Katalytische Hydrohalogenierung ungesättigter Produkte
- System VII:: 2. Zwischenspeicherung der nunmehr gesättigten Ätzprodukte
- System VIII:: Zersetzung halogenhaltiger Siliciumverbindungen unter Bildung von Halogenwasserstoff, der zur Sättigung der ungesättigten Ätzprodukte recycliert wird
- System IX:: Fraktionierte Auftrennung von nicht abreagierten Ätzprodukten; Recycling halogenhaltiger Kohlenwasserstoffe, diese werden in Tank T₁ überführt
- System X:: Schutzsystem für Vakuumpumpe

Die Kernkomponenten des ersten Subsystems (Syst. I) sind zwei Chemikalientanks T₁ und T₂. T₁ dient der Aufbewahrung frischer Ätzmedien sowie abdestillierter leichtflüchtiger Ätzprodukte, wie z.B. recyclierte halogenierte Kohlenwasserstoffe. Halogenierte Siliciumverbindungen sind hier nicht oder nur in Spuren enthalten. In T₂ werden nicht abreagierte flüssige Ätzmedien sowie flüssige oder gelöste Ätzprodukte, wie z.B. halogenierte Silane, aufbewahrt. T₂ wird direkt mit der abfließenden Flüssigkeit aus der Reaktionskammer gespeist, wobei etwaige in der Flüssigkeit enthaltene Feststoffpartikel vor Eintritt in den Tank durch einen µm-Filter entfernt werden. Weiterhin weist das Subsystem I ein Manometer 2 und eine über einen Dreiwegehahn 3 verbundene Analysenstation A₁ für die Analytik der flüssigen Ätzprodukte aus der Reaktionskammer auf.

Subsystem II (Syst. II) umfasst eine Reaktionskammer 5, die sich auf einem nicht abgebildeten x-y-Tisch befindet. Sie besteht aus inerten Kunststoffen, wie beispielsweise Teflon oder PE oder aus Edelstahl. Die Kammer ist nach außen hin hermetisch dicht abgeschlossen, frei von Feuchtigkeit und - je nach Ausführung - auch frei von Sauerstoff sowie unter Umständen während des Prozesses mit getrocknetem Stickstoff oder einem anderen inerten Gas geflutet. In der Reaktionskammer wird der zu bearbeitende SiliciumWafer oder Ingot durch einen Chuck 6 gehalten, wobei er mit Hilfe einer Vakuumpumpe angesaugt wird. Die Reaktionskammer besitzt einen Abfluss, der die ablaufende Flüssigkeit über einen Filter 1 in Tank T₂ leitet. Die beim Abtrag (Ätzen oder Ablation) entstehenden Gase werden über eine Absaugung aus der Kammer in Subsystem IV (Syst IV) geleitet, wobei ein Drosselventil 9 zwischengeschaltet ist, oder über einen Dreiwegehahn direkt in Subsystem V überführt. Zusätzlich weist die Reaktionskammer eine Kamera 5 auf.

Die Bearbeitung des Silicium-Wafers oder Ingots, z.B. dessen Schneiden oder Mikrostrukturieren, erfolgt mit Hilfe eines Flüssigkeitsstrahl geführten Lasers 7. Der Flüssigkeitsstrahl dient als Ätzmedium für das Silicium, der Laser aktiviert den Prozess photo- oder thermochemisch und ermöglicht eine punktgenaue Strukturierung des Werkstücks. Der Laserstrahl kann das Silicium aber auch ablativ abtragen, wobei dann das Silicium erst im Folgeschritt mit den Flüssigkeitskomponenten weiterreagiert, wobei dem Ätzprozess analoge Verbindungen gebildet werden.

Die Produkte werden in Subsystem V, das als erster Zwischenspeicher der Prozesskette dient, ausgefroren oder kondensiert. Zusätzlich weist das Subsystem V ein Überdruckventil 12 auf. Die bei Raumtemperatur in flüssiger Form vorhandenen Ätzprodukte werden nach einer Sammlung in Tank T₂ zunächst in Subsystem III destillativ aufgetrennt und die einzelnen Fraktionen nach steigendem Siedepunkt nach und nach in Subsystem V überführt.

Subsystem IV, das Subsystem V vorgeschaltet ist, umfasst eine Stofftrennungseinheit 11, im vorliegenden Fall einen Gaschromatographen und eine Analysevorrichtung 10, z.B. eine IR- oder RAMAN-Messeinheit zur Bestimmung der Komponenten der gasförmigen Ätzproduktmischung. Dieses Subsystem kann nur temporär oder optional - je nach Bedarf - genutzt werden; es ist über einen Bypass überbrückbar. Zwei Drosselventile unterbinden einen etwaigen Gasrückfluss aus den folgenden Systemen zurück in die Reaktionskammer.

Subsystem VI (Syst. VI) dient der katalytischen Hydrohalogenierung noch ungesättigter Ätzprodukte, z.B. mit Hilfe von HCl-Gas an einem Platin-Katalysator 13. Syst. VI wird durch Regelung der Kühlung und gegebenenfalls Heizen mit den ausgefrorenen bzw. kondensierten Stoffen aus Syst. V langsam gespeist. Es kann über Dreiwegehähne von den benachbarten Subsystemen abgeschottet werden. Die Abschottung gewährleistet einen längeren Aufenthalt der zu sättigenden Stoffe in der Kammer und somit eine Steigerung des Sättigungsgrades der ungesättigten Ätzprodukte.

Die nunmehr gesättigte Produktmischung wird in Subsystem VII, dem zweiten Zwischenspeicher der Prozesskette, gesammelt, indem sie erneut durch StickstoffKühlung ausgefroren oder kondensiert wird.

In Subsystem VIII werden schließlich die halogenierten Siliciumverbindungen, z.B. Trichlorsilan oder Siliciumtetrachlorid, analog dem Reinigungsschritt des Siliciums bei der großtechnischen Reinstsiliciumherstellung in Anwesenheit von Wasserstoff an einem durch Stromdurchfluss beheizten Siliciumstab 14 zu polykristallinem Silicium und Halogenwasserstoffen zersetzt. Die Halogenwasserstoffe werden zur katalytischen Hydrohalogenierung der beim Abtragsprozess anfallenden ungesättigten Ätzprodukte herangezogen. Als Subsystem VIII sind neben der hier beschriebenen Variante aber auch eine direkte epitaktische Abscheidung von Silicium auf verschiedenen Substraten oder andere übliche Siliciumproduktionsverfahren, wie beispielsweise Wirbelbettreaktoren möglich.

Auch Syst. VIII kann gegenüber den benachbarten Systemen abgeschottet werden, ebenfalls mit dem Ziel, die Verweilzeit der reagierenden Stoffe in der Kammer und somit deren Umsetzungsgrad zu erhöhen.

Nicht abreagierte Stoffe können nach Beendigung der Reaktion ausgefroren oder auskondensiert werden und schließlich in Subsystem IX geleitet werden, wo eine destillative Auftrennung der Rückstände, im vorliegenden Fall mittels eines Systems aus Vigreux-Kolonne 15, einem Thermometer 16, einer Kühl- oder Heizvorrichtung 17 und einem Kühler 19, erfolgt. Eventuell noch vorhandene halogenierte Kohlenwasserstoffe können dann erneut über die Gasleitung 18 in Tank T₁ überführt werden.

Subsystem X ist ein reines Schutzsystem für die zur Ansaugung des Werkstücks erforderliche Vakuumpumpe. Auch hier werden jedoch im Laufe des Prozesses erhebliche Mengen vor allem an flüssigen Ätzprodukten eingesaugt, die nach einer Filtrierung in Tank T₂ überführt werden können. Subsystem X weist hierbei eine Kühl- oder Heizvorrichtung 4 auf.

Die Apparatur sieht insgesamt drei Möglichkeiten (A1, A2, A3) für eine Analytik der Ätzgemische vor: Syst. IV (A2) dient dabei der Analyse gasförmiger Ätzprodukte, Syst. IX (A3) ermöglicht ein Abzapfen nicht abreagierter Komponenten allgemein und Hahn A1 ermöglicht eine Bestimmung der Zusammensetzung des Tanks T₂.

Für die Subsysteme III und IX sind neben der Destillation auch andere Trennverfahren denkbar, z.B. chromatographische Verfahren. Damit können - je nach Bedarf - zum Teil noch verbesserte Stoffauftrennungen erreicht werden.

Die Subsysteme I, V, VI, VII und VIII sind mit Manometern und Überdruckventilen versehen. Die Leitungen zwischen den Subsystemen II-IX (III ausgeschlossen) in der Prozesskette sind konstant auf 45 °C beheizt, um ein Auskondensieren des Lösemittels Dichlormethan zu verhindern.

Eine weitere Variante sieht vor, dass halogenierte Kohlenstoffe oder Kohlenwasserstoffe als Lösemittel oder Halogenquelle eingesetzt werden. Auch in diesem Fall kann das in der Figur dargestellte Verfahrensprinzip angewendet werden, wobei folgende Abwandlungen auftreten:
1. Es wird trockenes HCl-Gas definierter Menge in die Subsysteme Syst. II und Syst. V sowie Tank T₂ geleitet. Stattdessen wird auf die Einleitung von Sauerstoff in die Apparatur verzichtet.
2. Vor der Zersetzung des Produktgemisches in Syst. VIII werden die Silan-Verbindungen destillativ vollständig von den kohlenstoffhaltigen Komponenten abgetrennt. Letztere werden nicht durch Syst. VIII geleitet, weder vor, während oder nach der Zersetzung der Silane.

Mit der ersten Maßnahme soll dem Problem Rechnung getragen werden, dass die bei schnellem Ätzprozess entstehenden ungesättigten halogenierten Kohlenstoff-(Wasserstoff)-Verbindungen und Silane zum Teil zur Polymerisation neigen.

In dieser Variante wird eine Polymerisation der ungesättigten Ätzprodukte durch eine frühe Sättigung dieser Stoffe, beispielsweise durch Reaktion mit HCl, verhindert, indem dieses gasförmig sowohl über die auskondensierten gasförmigen Ätzprodukte in Subsystem V wie auch durch die flüssigen Ätzprodukte in Tank T₂ geleitet wird, ferner auch in geringer Menge die Bearbeitungskammer (Syst. II). Hier erfolgt die Einleitung durch eine Düse, welche direkt auf die Bearbeitungsstelle gerichtet ist. Eine Bestrahlung der Stoffgemische mit Licht definierter Wellenlänge, beispielsweise mit UV-Licht, kann den Sättigungsprozess beschleunigen. Diese Methode umgeht die Nachteile einer Sauerstoff-Kontamination des Produktgemisches.

Der breite Ätzangriff des HCl-Gases auf die Substratoberfläche in der Bearbeitungskammer wird durch einen dünnen Flüssigkeitsfilm, der sich während der Bearbeitung auf der Oberfläche des Substrates ausbildet, unterbunden.

Mit der zweiten Maßnahme wird folgendes erreicht. Wird der Gesamt-Prozess wie in oben genannter Patentanmeldung dargelegt, betrieben, so kommt er in Subsystem VIII neben der Abscheidung polykristallinen Siliciums auch noch zur Abscheidung nennenswerter Mengen an Siliciumcarbid, welches das Silicium verunreinigt. Die Abscheidung von Siliciumcarbid kann, muss jedoch nicht zwangsläufig erwünscht sein. Siliciumcarbid ist beispielsweise als Hauptbestandteil einer Passivierungsschicht für Solarzellen nützlich.

Soll jedoch reinstes polykristallines Silicium abgeschieden werden, so ist es sinnvoll, die im Ätzprodukt vorhandenen Kohlenstoff-Halogen-Verbindungen destillativ von den Silan-Verbindungen noch vor deren Zersetzung in Subystem VIII vollständig abzutrennen.

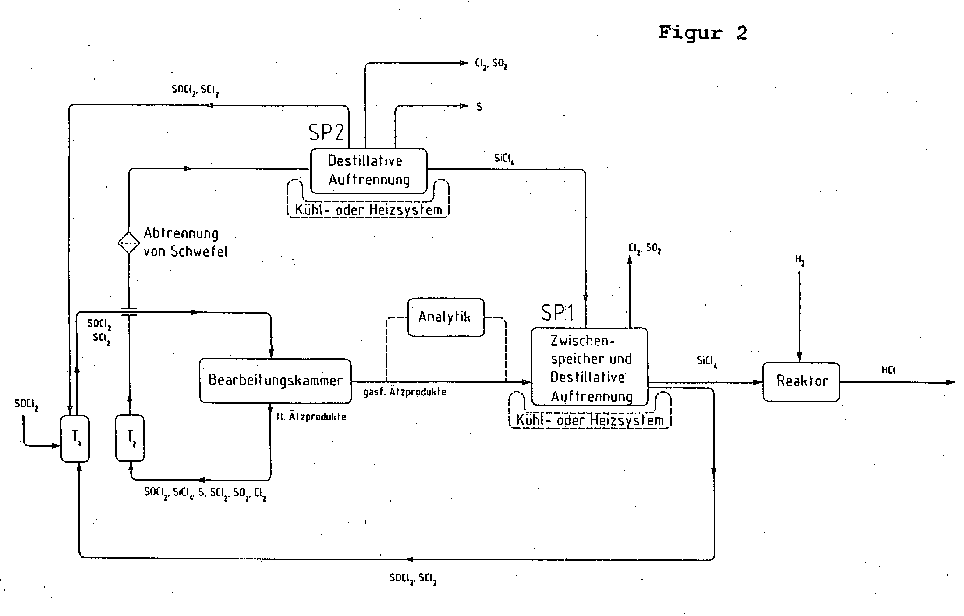

Die wesentlichen Komponenten des in Fig. 2 dargestellten erfindungsgemäßen Systems sind zwei Tanks für die Speicherung der Ätzmedien T₁ und T₂, die Bearbeitungskammer, ein Zwischenspeicher SP 1, der zur destillativen Auftrennung der gasförmigen Ätzprodukte dient und einer SP 2, in dem die Zwischenlagerung und Auftrennung der flüssigen Ätzprodukte stattfindet. Des Weiteren umfasst das Gesamtsystem einen Abscheidreaktor, in dem beispielsweise polykristallines Silicium aus SiCl₄, welches eines der Ätzprodukte darstellt, wieder abgeschieden werden kann.

Tank T₁ dient als Vorratstank für extern zugeführtes Thionylchlorid (SOCl₂) oder Sulfurylchlorid (SO₂Cl₂). Dieses wird in der Bearbeitungskammer durch Laserlicht entweder thermisch oder photochemisch gespalten. Eine thermische Spaltung erfolgt z.B. beim Einsatz eines Nd:YAG-Lasers, wobei die thermische Zersetzung dann an der auf geheizten Oberfläche des Substrats erfolgt. Sie findet schon bereits bei Temperaturen statt die nur unwesentlich höher liegen, als die Siedepunkte der Verbindungen (Sdp. von SOCl₂ liegt bei 76°C, Zersetzung von SO₂Cl₂ erfolgt schon ab 70°C), wobei sehr reaktives, naszierendes Chlorgas entsteht, das als eigentliches Ätzmedium für das Silicium dient:

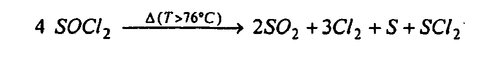

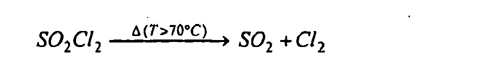

*Si*(*s*)+2*C*/₂(*g*) → *SiC*/₄ (*solv. oder g*)

Mit Hilfe eines UV-Lasers findet eine radikalische Zersetzung der Halogenquelle statt, wobei sehr reaktive Chlorradikale gebildet werden, die direkt mit dem Silicium zu SiCl₄ weiterreagieren:

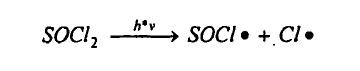

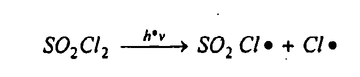

*SO*₂ *Cl* • → *SO*₂ +*Cl* •

4*Cl* • + *Si* → *SiC*/₄

("•" symbolisiert ein ungepaartes Elektron, SOCl•, SO₂Cl• und Cl• sind demnach Radikale). Durch Zusatz von Absorber-Stoffen und/oder Radikalstartern, die ihrerseits durch Laserlicht verschiedenster Wellenlänge aktiviert werden können, kann auch mit Lasern in anderen Wellenlängenbereichen effektiv gearbeitet werden.

Das entstehende, niedrigsiedende Siliciumtetrachlorid verlässt die Bearbeitungskammer entweder auf gasförmigem Wege zusammen mit den gasförmigen Ätzprodukten wobei es in SP 1 mit denselben ausgefroren wird, oder auf flüssigem Wege wobei es in Tank T₂ eingeleitet wird, zusammen mit den anderen flüssigen Abfällen des Bearbeitungsprozesses, deren größte Fraktion nicht abreagiertes SOCl₂ oder SO₂Cl₂ ist.

In SP 1 wird das SiCl₄ destillativ von den restlichen Komponenten abgetrennt. SO₂ und Cl₂ sind unter Standardbedingungen Gase und können sehr leicht abgesaugt werden. Beispielsweise differieren die Siedepunkte von SOCl₂ und SiCl₄ lediglich um 18°C, ihre Schmelzpunkte jedoch um 35°C, was eine Trennung der beiden Stoffe durch Ausfrieren der bei höheren Temperaturen erstarrenden Komponente (SiCl₄ bei -69°C) nahelegt, wodurch eine sehr saubere Trennung erfolgen kann. Allerdings ist auch eine partielle Trennung durch Destillation denkbar. Im daraus erhaltenen, mit SiCl₄ angereicherten Gemisch können dann die Reste an Thionylchlorid thermisch vollständig zersetzt werden. Die dabei erhaltenen Abfallprodukte (SO₂, Cl₂, SCl₂ und S) sind wiederum sehr leicht von SiCl₄ destillativ abtrennbar. Letztere Variante besitzt den Vorteil, dass dabei auf eine energieintensive Stickstoff- oder Kohlendioxid-Kühlung, die zum Ausfrieren der Komponenten erforderlich wäre, verzichtet werden kann, was die Rentabilität des Gesamtprozesses steigert.

Das sehr reine SiCl₄ kann dann in einem Siemens-Reaktor unter Wasserstoff-Einleitung zu polykristallinem Silicium und Chlorwasserstoff zersetzt werden.

Nicht abreagiertes SOCl₂, SO₂Cl₂ und beim Prozess gebildetes SCl₂ werden wieder in Tank T₁ geleitet, von wo sie direkt wieder in die Bearbeitungskammer geleitet werden.

Die entstehenden (Abfall-)Gase HCl und SO₂ werden in basische wässrige Lösungen geleitet und neutralisiert oder als Ausgangstoffe für chemische Synthesen verwendet. Das in reiner Form erhaltene feste Abfallprodukt Schwefel kann ebenfalls industriell weiter verwertet werden.

## Patentansprüche

1. Verfahren zum Materialabtrag an Festkörpern mit folgenden Schritten:
a) Flüssigkeitsstrahl-geführtes Laser-Ätzen des Festkörpers mit einem Flüssigkeitsstrahl aus einem Ätzmedium enthaltend mindestens ein Halogenierungsmittel,
b) Isolierung von halogenhaltigen Verbindungen des Festkörpermaterials durch Destillation, Kondensation und/oder Kryofokussierung aus den Ätzprodukten und
c) Rezyklierung des Festkörpermaterials durch Zersetzung der halogenhaltigen Verbindungen.

2. Verfahren nach Anspruch 1,
**dadurch gekennzeichnet, dass** das Halogenierungsmittel ausgewählt ist aus der Gruppe bestehend aus wasserfreien halogenhaltigen organischen oder anorganischen Verbindungen und deren Gemischen, insbesondere ausgewählt aus der Gruppe der geradkettigen oder verzweigten C₁-C₁₂-Kohlenwasserstoffe, die zumindest teilweise halogeniert sind, bevorzugt ausgewählt aus der Gruppe bestehend aus Tetrachlorkohlenstoff, Chloroform, Bromoform, Dichlormethan und Gemischen hiervon.

3. Verfahren nach einem der Ansprüche 1 oder 2,
**dadurch gekennzeichnet, dass** die Ätzprodukte ausgewählt sind aus der Gruppe bestehend aus halogenierten Silanen, flüssigen halogenierten Kohlenwasserstoffen, Silicium, Siliciumcarbid und deren Gemischen.

4. Verfahren nach einem der Ansprüche 2 bis 3,
**dadurch gekennzeichnet, dass** in Schritt a) Sauerstoff oder ein Sauerstoff enthaltendes Gas zugeführt wird, das vor Schritt b) wieder entfernt wird.

5. Verfahren nach einem der Ansprüche 2 bis 4,
**dadurch gekennzeichnet, dass** die Ätzprodukte einer katalytischen Hydrohalogenierung, insbesondere mit Chlorwasserstoff sowie einem Katalysator, bevorzugt Palladium, Platin, Nickel und/oder deren Legierungen, unter Bildung von gasförmigen und halogenhaltigen gesättigten Verbindungen unterzogen werden.

6. Verfahren nach Anspruch 5,
**dadurch gekennzeichnet, dass** eine Rezyklierung des in Schritt c) gebildeten Halogenwasserstoffs erfolgt und dieser der Hydrohalogenierung zugeführt wird.

7. Verfahren nach Anspruch 1,
**dadurch gekennzeichnet, dass** das Halogenierungsmittel frei von Kohlenstoff ist, insbesondere ausgewählt aus der Gruppe der halogenhaltigen Schwefel- und/oder Phosphorverbindungen, bevorzugt ausgewählt aus der Gruppe bestehend aus Sulfurylchlorid, Thionylchlorid, Schwefeldichlorid, Dischwefeldichlorid, Phosphortrichlorid, Phosphorpentachlorid und deren Gemischen.

8. Verfahren nach Anspruch 7,
**dadurch gekennzeichnet, dass** die Ätzprodukte ausgewählt sind aus der Gruppe bestehend aus halogenierten Silanen, Silicium und deren Gemischen.

9. Verfahren nach einem der vorhergehenden Ansprüche,
**dadurch gekennzeichnet, dass** das Ätzmedium zusätzlich mindestens einen Strahlungsadsorber, insbesondere einen Farbstoff, bevorzugt Eosin, Fluorescein, Phenolphthalein und/oder Bengalrosa oder eine polycyclische aromatische Verbindung, insbesondere Pyren oder Naphthacen, enthält.

10. Verfahren nach einem der vorhergehenden Ansprüche,
**dadurch gekennzeichnet, dass** das Ätzmedium zusätzlich mindestens einen Radikalstarter, insbesondere ausgewählt aus der Gruppe bestehend aus Dibenzoyl-Peroxid und Azoisobutyronitril, enthält.

11. Verfahren nach einem der vorhergehenden Ansprüche,
**dadurch gekennzeichnet, dass** das Ätzmedium zusätzlich elementare Halogene in flüssiger Form, z.B. Brom und Iod, Interhalogenverbindungen, z.B. Iodmonochlorid oder Iodtrichlorid, oder halogenierte Kohlenwasserstoffe in fester Form, z.B. Iodoform, enthält.

12. Verfahren nach einem der vorhergehenden Ansprüche,
**dadurch gekennzeichnet, dass** durch den Laser eine photo- und/oder thermochemische Aktivierung des Ätzmediums erfolgt.

13. Verfahren nach einem der vorhergehenden Ansprüche,
**dadurch gekennzeichnet, dass** ein Laser mit einer im UV-Bereich liegenden Emission eingesetzt wird und eine im Wesentlichen photochemische Aktivierung des Ätzmediums erfolgt, oder ein Laser mit einer im IR-Bereich liegenden Emission eingesetzt wird und eine im Wesentlichen thermochemische Aktivierung des Ätzmediums erfolgt, oder ein Laser mit einer im grünen Bereich des Spektrums, insbesondere bei 532 mm, liegenden Emission eingesetzt wird und eine im Wesentlichen photochemische Aktivierung des Ätzmediums erfolgt, oder ein Laser mit einer im blauen Bereich des Spektrums, insbesondere bei 457 mm, liegenden Emission eingesetzt wird und eine im Wesentlichen photochemische Aktivierung des Ätzmediums erfolgt.

14. Verfahren nach einem der vorhergehenden Ansprüche,
**dadurch gekennzeichnet, dass** die gasförmigen Ätzprodukte kryofokussiert und/oder kondensiert werden und/oder die flüssigen Ätzprodukte destillativ aufgetrennt werden.

15. Verfahren nach einem der vorhergehenden Ansprüche,
**dadurch gekennzeichnet, dass** der Festkörper aus Silicium besteht.

16. Verfahren nach dem vorhergehenden Anspruch,
**dadurch gekennzeichnet, dass** halogenierte Silan-verbindungen als Ätzprodukte zu polykristallinem Silicium und Halogenwasserstoff, insbesondere nach dem Siemens-Verfahren zersetzt werden, wobei das Silicium bevorzugt in der Prozesskette epitaktisch abgeschieden wird.

17. Verwendung des Verfahrens nach einem der vorhergehenden Ansprüche zum Schneiden und/oder Mikrostrukturieren von Festkörpern.

## Claims

1. Method for removing material from solid bodies comprising the following steps:
a) liquid jet-guided laser etching of the solid body with a liquid jet comprising an etching medium containing at least one halogenating agent,
b) isolating of halogen-containing compounds of the solid-body material by distillation, condensation and/or cryofocusing from the etching products and
c) recycling of the solid-body material by decomposition of the halogen-containing compounds.

2. Method according to Claim 1,
**characterised in that** the halogenating agent is selected from the group consisting of anhydrous, halogen-containing organic or inorganic compounds and mixtures thereof, in particular selected from the group of straight-chain or branched C₁-C₁₂ hydrocarbons which are at least partially halogenated, preferably selected from the group consisting of tetrachloromethane, chloroform, bromoform, dichloromethane and mixtures hereof.

3. Method according to one of Claims 1 or 2,
**characterised in that** the etching products are selected from the group consisting of halogenated silanes, liquid halogenated hydrocarbons, silicon, silicon carbide and mixtures thereof.

4. Method according to one of Claims 2 to 3,
**characterised in that**, in step a), oxygen or a gas containing oxygen is supplied, which is removed again before step b).

5. Method according to one of Claims 2 to 4,
**characterised in that** the etching products are subjected to a catalytic hydrohalogenation, in particular with hydrogen chloride and also with a catalyst, preferably palladium, platinum, nickel and/or alloys thereof, with formation of gaseous and halogen-containing saturated compounds.

6. Method according to Claim 5,
**characterised in that** recycling of the hydrogen halide formed in step c) is effected and the latter is supplied to the hydrohalogenation.

7. Method according to Claim 1,
**characterised in that** the halogenating agent is free of carbon, in particular selected from the group of halogen-containing sulphur compounds and halogen-containing phosphorus compounds, preferably selected from the group consisting of sulphuryl chloride, thionyl chloride, sulphur dichloride, disulphur dichloride, phosphorus trichloride, phosphorus pentachloride and mixtures thereof.

8. Method according to Claim 7,
**characterised in that** the etching products are selected from the group consisting of halogenated silanes, silicon and mixtures thereof.

9. Method according to one of the preceding claims,
**characterised in that** the etching medium contains in addition at least one radiation adsorber, in particular a colorant, preferably eosin, fluorescein, phenolphthalein and/or Bengal pink or a polycyclic aromatic compound, in particular pyrene or naphthacene.

10. Method according to one of the preceding claims,
**characterised in that** the etching medium contains in addition at least one radical initiator, in particular selected from the group consisting of dibenzoyl peroxide and azoisobutyronitrile.

11. Method according to one of the preceding claims,
**characterised in that** the etching medium contains in addition elementary halogens in liquid form, e.g. bromine and iodine, interhalogen compounds, e.g. iodine monochloride or iodine trichloride, or halogenated hydrocarbons in solid form, e.g. iodoform.

12. Method according to one of the preceding claims,
**characterised in that** photo- and/or thermochemical activation of the etching medium is effected by the laser.

13. Method according to one of the preceding claims,
**characterised in that** a laser with an emission in the UV range is used and an essentially photochemical activation of the etching medium is effected, or a laser with an emission in the IR range is used and an essentially thermochemical activation of the etching medium is effected, or a laser with an emission in the green range of the spectrum, in particular at 532 mm, is used and an essentially photochemical activation of the etching medium is effected, or a laser with an emission in the blue range of the spectrum, in particular at 457 mm, is used and an essentially photochemical activation of the etching medium is effected.

14. Method according to one of the preceding claims,
**characterised in that** the gaseous etching products are cryofocused and/or condensed and/or the liquid etching products are separated by distillation.

15. Method according to one of the preceding claims,
**characterised in that** the solid body comprises silicon.

16. Method according to the preceding claim,
**characterised in that** halogenated silane compounds as etching products are decomposed into polycrystalline silicon and hydrogen halide, in particular according to the Siemens method, the silicon being deposited preferably epitaxially in the process chain.

17. Use of the method according to one of the preceding claims for cutting and/or microstructuring of solid bodies.

## Revendications

1. Procédé pour l'enlèvement de matière sur des corps solides, comprenant les étapes suivantes :
a) décapage au laser, guidé par un jet de liquide, du corps solide avec un jet de liquide formé par un fluide de décapage comprenant au moins un agent d'halogénation,
b) isolation de composés halogénés du matériau du corps solide hors des produits de décapage, par distillation, condensation et/ou focalisation cryogénique, et
c) recyclage du matériau du corps solide par décomposition des composés halogénés.

2. Procédé selon la revendication 1, **caractérisé en ce que** l'agent d'halogénation est choisi dans le groupe comprenant des composés halogénés organiques ou anorganiques, exempts d'eau, et des mélanges de ceux-ci, choisis en particulier dans le groupe des hydrocarbures en C₁-C₁₂ en chaînes linéaires ou ramifiées, qui sont halogénés au moins partiellement, choisis de préférence dans le groupe comprenant le tétrachlorocarbone, le chloroforme, le bromoforme, le dichlorométhane et des mélanges de ceux-ci.

3. Procédé selon la revendication 1 ou 2, **caractérisé en ce que** les produits de décapage sont choisis dans le groupe comprenant des silanes halogénés, des hydrocarbures halogénés liquides, le silicium, le carbure de silicium et des mélanges de ceux-ci.

4. Procédé selon l'une quelconque des revendications 2 à 3, **caractérisé en ce que** dans l'étape a) est ajouté de l'oxygène ou un gaz contenant de l'oxygène, qui est éliminé avant l'étape b).

5. Procédé selon l'une quelconque des revendications 2 à 4, **caractérisé en ce que** les produits de décapage sont soumis à une hydro-halogénation catalytique, en particulier avec de l'hydrogène chloré, ainsi qu'un catalyseur, de préférence du palladium, platine, nickel et/ou des alliages de ceux-ci, moyennant la formation de composés gazeux et halogénés saturés.

6. Procédé selon la revendication 5, **caractérisé en ce qu'**il est effectué un recyclage de l'hydrogène halogéné formé dans l'étape c) et celui-ci est acheminé vers l'hydro-halogénation.

7. Procédé selon la revendication 1, **caractérisé en ce que** l'agent d'halogénation est exempt de carbone, choisi en particulier dans le groupe des composés halogénés de soufre et/ou de phosphore, choisi de préférence dans le groupe comprenant le chlorure de sulfuryle, le chlorure de thionyle, le dichlorure de soufre, le dichlorure de disoufre, le trichlorure de phosphore, le pentachlorure de phosphore et des mélanges de ceux-ci.

8. Procédé selon la revendication 7, **caractérisé en ce que** les produits de décapage sont choisis dans le groupe comprenant des silanes halogénés, le silicium et des mélanges de ceux-ci.

9. Procédé selon l'une quelconque des revendications précédentes, **caractérisé en ce que** le produit de décapage comprend en plus au moins un adsorbeur de rayons, en particulier un colorant, de préférence de l'éosine, de la fluorescéine, de la phénolphthaléine et/ou du rose de bengale ou un composé aromatique polycyclique, en particulier le pyrène ou le naphtacène.

10. Procédé selon l'une quelconque des revendications précédentes, **caractérisé en ce que** le produit de décapage comprend en plus au moins un amorceur de radicaux, choisi en particulier dans le groupe comprenant le peroxyde de dibenzoyle et l'azoisobutyronitrile.

11. Procédé selon l'une quelconque des revendications précédentes, **caractérisé en ce que** le produit de décapage comprend en plus des halogènes élémentaires en forme liquide, tels que le brome et l'iode, des composés interhalogénés, tels que le monochlorure d'iode ou le trichlorure d'iode, ou des hydrocarbures halogénés en forme solide, tels que l'iodoforme.

12. Procédé selon l'une quelconque des revendications précédentes, **caractérisé en ce que** sous l'effet du laser, il se produit une activation photochimique et/ou thermochimique du produit de décapage.

13. Procédé selon l'une quelconque des revendications précédentes, **caractérisé en ce que** le laser utilisé est un laser avec une émission située dans le domaine des ultraviolets et il se produit une activation sensiblement photochimique du produit de décapage, ou un laser avec une émission située dans le domaine des infrarouges et il se produit une activation sensiblement thermochimique du produit de décapage, ou un laser avec une émission située dans le domaine vert du spectre, en particulier de 532 mm, et il se produit une activation sensiblement photochimique du produit de décapage, ou un laser avec une émission située dans le domaine bleu du spectre, en particulier de 457 mm, et il se produit une activation sensiblement photochimique du produit de décapage.

14. Procédé selon l'une quelconque des revendications précédentes, **caractérisé en ce que** les produits de décapage gazeux sont soumis à une focalisation cryogénique et/ou à une condensation et/ou les produits de décapage liquides sont séparés par distillation.

15. Procédé selon l'une quelconque des revendications précédentes, **caractérisé en ce que** le corps solide est formé de silicium.

16. Procédé selon l'une quelconque des revendications précédentes, **caractérisé en ce que** les composés de silane halogénés sont décomposés sous forme de produits de décapage en silicium polycristallin et hydrogène halogéné, en particulier selon le procédé Siemens, le silicium étant séparé sous forme épitactique de préférence dans la chaîne du processus.

17. Utilisation du procédé selon l'une quelconque des revendications précédentes, pour la coupe et/ou la microstructuration de corps solides.
